# EUROPÄISCHE PATENTSCHRIFT

(11) **EP 4 074 626 B1**
(45) Veröffentlichungstag und Bekanntmachung des Hinweises auf die Patenterteilung: **21.02.2024**
(21) Anmeldenummer: 21168914.6
(22) Anmeldetag: 16.04.2021
(51) Int. Cl.: B65G 1/04, B65G 17/20, B65G 47/61

(54) **FÖRDERSTRECKE FÜR EINEN HÄNGEFÖRDERER**
CONVEYOR BELT FOR A SUSPENSION CONVEYOR
BANDE TRANSPORTEUSE POUR UN TRANSPORTEUR SUSPENDU

(43) Veröffentlichungstag der Anmeldung: 19.10.2022
(73) Patentinhaber: BEUMER Group GmbH & Co. KG, 59269 Beckum (DE)
(72) Erfinder: NEUGEBAUER, Jürgen, 8102 Semriach (AT)
(74) Vertreter: Angerhausen, Christoph

(56) Entgegenhaltungen:
- EP-A1- 2 441 717
- EP-A1- 3 670 393
- WO-A1-2020/089177
- DE-T2- 69 500 497

## Beschreibung

Die Erfindung geht aus von einer Förderstrecke für einen Hängeförderer, wobei die Förderstrecke eine Mehrzahl Carrier aufweist, die in ein Führungsprofil der Förderstrecke eingehängt und entlang des Führungsprofils bewegt sind, wobei der Carrier eine Kennung und die Förderstrecke mindestens zwei in Längsrichtung des Führungsprofils beabstandete Sensoren zur Auslesung der Kennung aufweist. Eine derartige Förderstrecke ist in der EP 3 670 393 A1 beschrieben. Die Carrier können dabei beispielsweise von einem Mitnehmer angetriebenen und/oder entlang eines Gefälles der Förderstrecke schwerkraftgetrieben angetrieben sein. Eine weitere Förderstrecke, die den Oberbegriff des Anspruchs 1 zeigt, ist bekannt aus der EP 2 441 717 A1. Diese offenbart eine Transportvorrichtung, mit einer Vielzahl Transportmitteln, welche entlang einer Transportbahn zwischen an der Transportbahn angeordneten Stationen transportiert werden, wobei die Transportmittel Signalgeber aufweisen, welche mittels entlang der Transportbahn angeordneter Sensoren detektierbar sind.

Die Förderstrecke kann insbesondere ein sogenannter Stauförderer sein. Stauförderer werden beispielsweise im Zusammenhang mit der Sortierung und Sequenzierung der Carrier bzw. der an den Carrier hängenden Taschen und deren Inhalt in sogenannten Sortierschleifen verwendet, um die Carrier mit ihren daran hängenden Taschen in einer bevorzugten Reihenfolge beispielsweise einem Entladeplatz für die Entleerung der Taschen zuzuführen. Die Sortierschleife kann dabei eine Mehrzahl parallel zueinander verlaufender Stauförderstrecken aufweisen, entlang welcher die Carrier Stoß an Stoß aneinandergereiht zwischengelagert sind, bis sie zur Herstellung der bevorzugten Sequenzierung beispielsweise wieder auf einen Transferförderer der Förderstrecke übertragen werden. Dazu sind die Stauförderer über Weichen an die Transferförderer angeschlossen.

Problematisch ist dabei die Feststellung des Füllstandes der Staufördererstrecke, da unbedingt eine Überfüllung der Staufördererstrecken zu vermeiden ist, was zu einer Blockierung der Weiche zwischen dem Transferförderer und dem Stauförderer oder zum Blockieren des Transferförderers und damit des gesamten Hängeförderer-Systems führen kann. Im Stand der Technik wird diesem Problem dadurch begegnet, dass die Staufördererstrecken in Bezug auf die Anzahl der Carrier sehr großzügig bemessen werden. Dadurch nimmt die Stauförderstrecke jedoch vergleichsweise viel Platz ein, der ineffektiv genutzt wird.

Es ist daher die Aufgabe der Erfindung, eine Förderstrecke der eingangs beschriebenen Art derart weiterzuentwickeln, dass sie eine höhere Flächenausnutzung aufweist.

Diese Aufgabe wird durch eine Förderstrecke mit den Merkmalen des Anspruchs 1 gelöst. Der nebengeordnete Anspruch 13 betrifft ein entsprechendes Verfahren. Vorteilhafte Ausführungsformen der Erfindung sind jeweils Gegenstand der abhängigen Ansprüche.

Demgemäß ist bei einer Förderstrecke der eingangs beschriebenen Art vorgesehen, dass die zwei Sensoren Teil eines Überfüllsensors sind und dieser oder eine mit dem Überfüllsensor kommunikativ in Verbindung stehende Steuerung dazu eingerichtet ist, auf eine Überfüllung der Förderstrecke zu schließen, wenn nach einem Erfassen der Kennung durch den ersten Sensor innerhalb eines vorgegebenen Zeitintervalls eine Erfassung der Kennung durch den zweiten Sensor ausbleibt. Die Kennung kann eine optisch lesbare Kennung, beispielsweise ein Barcode oder ein QR-Code, oder eine elektromagnetisch auslesbare Kennung, etwas ein RFID-Transponder sein. Vorzugsweise ist die Kennung zumindest eine berührungslos auslesbare Kennung.

Die Kennung kann insbesondere eine eindeutige Kennung sein, sodass beispielsweise bereits dadurch auf eine Überfüllung der Förderstrecke geschlossen werden kann, dass ein bestimmter Carrier zwar von einem ersten der beiden in Längsrichtung des Führungsprofils beabstandeten Sensoren detektiert wird, von dem zweiten der Sensoren jedoch zumindest bis zum Ablauf einer Karenzzeit nicht erfasst wurde. Es wird somit mit technisch sehr einfachen Mitteln eine Lösung bereitgestellt, welche Rückschlüsse auf den Füllzustand einer Förderstrecke erlaubt. Die Kennungen können beispielsweise RFID-Transmitter und die Sensoren zur Auslesung dementsprechend geeignete Lesegeräte sein. Solche Kennungen weisen die Carrier aus dem Stand der Technik häufig ohnehin auf, um sie prozesssicher durch das Hängeförderer-System navigieren zu können.

Der Abstand zwischen zweien der mindestens zwei Sensoren kann einem Mehrfachen, vorzugsweise mindestens dem Dreifachen und besonders bevorzugt mindestens dem Fünffachen einer jeweiligen Abmessung der Carrier in seiner Förderrichtung entlang des Führungsprofils betragen. Dies erlaubt es, dass auch vor dem Erreichen einer Überfüllung, d.h. vor dem Ausbleiben der Detektion der Kennung durch den in Förderrichtung zweiten Sensor, eine Füllstatuserfassung erfolgen kann. Dazu kann neben dem zeitlichen Abstand zwischen der Detektion derselben Kennung eines Carriers auch die Anzahl der Carrier erfasst werden, welche nach dem Detektieren eines Carriers durch den in Förderrichtung ersten Sensor und vor dem Detektieren desselben Carriers durch den in Förderrichtung zweiten Sensor von dem ersten Sensor detektiert werden. Daraus kann auf einen Abstand zwischen den Carriern geschlossen werden, sofern diese nicht bereits ohnehin unmittelbar aneinandergrenzend, mithin Stoß an Stoß entlang der Förderstrecke gefördert sind.

Der Abstand zwischen den Sensoren kann in Abhängigkeit einer erwarteten Füllung von in die Carrier eingehängter Taschen abhängen, insbesondere von einer erwarteten mittleren horizontalen Breite der gefüllten Taschen. Diese Abmessung kann anwendungsspezifisch ausgewählt oder sensorisch gemessen werden.

Der Überfüllsensor kann beispielsweise an einem in Förderrichtung hinteren Ende des den Überfüllsensor aufweisenden Förderstreckenabschnitts, beispielsweise an dem hinteren Ende eines Stauförderers angeordnet sein, beispielsweise vor einer Ausfahrweiche, mit Hilfe welcher die Carrier die den Überfüllsensor aufweisende Förderstrecke, beispielsweise einen Stauförderer, verlassen können, etwa um auf einen Transferförderer der Förderstrecke übertragen zu werden.

Der Abstand zwischen zweien der mindestens zwei Sensoren kann maximal dem Fünfzigfachen, vorzugsweise maximal dem Zwanzigfachen und besonders bevorzugt maximal dem Zehnfachen der jeweiligen Abmessung des Carriers in seiner Förderrichtung entlang des Führungsprofils betragen.

Die Kennung kann eine dem betreffenden Carrier eindeutig identifizierende Kennung sein. Die Kennung kann optisch oder elektromagnetisch auslesbar sein, etwa in einem berührungslos auslesbaren Speicher, beispielsweise in einem RFID-Transponder, hinterlegt sein. Eine optisch auslesbare Kennung kann beispielsweise ein Barcode oder ein QR-Code sein.

Wenn die Carrier von mindestens einem Mitnehmer angetrieben sind, können sie jeweils ein magnetisches Kupplungselement aufweisen und der Mitnehmer kann eine entlang des Führungsprofils geführte Förderkette mit einer Vielzahl entlang der Förderkette angeordneter Mitnehmerelemente sein oder aufweisen. Die Kupplungselemente der Carrier können über Magnetkraft berührungslos und lösbar an die Mitnehmerelemente der Förderkette gekoppelt sein. Eine derartige Förderstrecke ist in der EP 3 670 393 A1 beschrieben.

Der Überfüllsensor kann dazu eingerichtet sein, einen zeitlichen Abstand zwischen dem Erfassen der Kennung durch einen ersten Sensor der entlang der Förderstrecke angeordneten Sensoren und dem Erfassen derselben Kennung durch einen in Längsrichtung des Führungsprofils dem ersten Sensor nachfolgenden zweiten Sensor der entlang der Förderstrecke angeordneten Sensoren zu bestimmen.

Das Zeitintervall kann gemäß t = d/v + tₒ bestimmt sein, wobei d der Abstand der beiden Sensoren zueinander, v die Vorschubgeschwindigkeit des Mitnehmers entlang des Führungsprofils und tₒ eine Karenzzeit ist.

Der Überfüllsensor kann dazu eingerichtet sein, auf eine Überfüllung der Förderstrecke zu schließen, wenn die Kennung länger als eine Karenzzeit in einem Erfassungsbereich eines der beiden Sensoren angeordnet ist. Alternativ oder zusätzlich kann der Überfüllsensor dazu eingerichtet sein, auf eine Überfüllung der Förderstrecke zu schließen, wenn die Kennung innerhalb einer Karenzzeit mehrfach in einem Erfassungsbereich mindestens eines der beiden Sensoren angeordnet ist.

Schließlich kann der Überfüllsensor dazu eingerichtet sein, anhand der erkannten Kennungen eine Anzahl der Carrier auf der Förderstrecke zu zählen. Daraus kann auf eine mittlere horizontale Taschenbreite und demgemäß auf eine mittlere Füllung der Taschen rückgeschlossen werden. Diese Information kann dazu verwendet werden, die Anzahl der Carriers, die in die Förderstrecke gespeist werden, zu dosieren. Der Überfüllsensor kann seitlich von dem Führungsprofil und die Sensoren mit ihrem Messfeld dem Carrier zugewandt angeordnet sein.

Der Überfüllsensor kann über ein eine Z-Geometrie aufweisendes Halteelement, vorzugsweise ein eine Z-Kantung aufweisendes Halteblech an dem Führungsprofil festgelegt sein. Dabei kann das Halteelement über eine sich in Längsrichtung des Führungsprofils erstreckende Nut, vorzugsweise eine hinterschnittige Nut, an dem Führungsprofil festgelegt sein. Das Halteelement kann über eine Schraube oder einen Nutenstein in der Nut festgelegt sein.

Der Überfüllsensor kann unverstellbar in Bezug auf das Führungsprofil festgelegt sein und die Carrier können in ihrer Förderrichtung unter einem festen Abstand zu dem Überfüllsensor an dem Überfüllsensor vorbeigeführt sein.

Der Überfüllsensor kann ein Gehäuse aufweisen, welches sich mit seiner Längsseite parallel zu der Längsrichtung des Führungsprofils erstreckt. Dabei können die mindestens zwei Sensoren in der Längsrichtung zueinander beabstandet in dem Gehäuse angeordnet sein.

Gemäß einem anderen Aspekt wird ein Verfahren für die Erkennung einer Überfüllung einer Förderstrecke eines Hängeförderers beschrieben, wobei das Verfahren die Schritte aufweist:
- Befördern einer Vielzahl Carrier entlang einer Förderstrecke eines Hängeförderers, wozu die Carrier in ein Führungsprofil des Hängeförderers eingehängt von einem Mitnehmer entlang des Führungsprofils angetriebenen werden;
- Erfassen einer Kennung eines der Carrier durch einen ersten von mindestens zweien in Längsrichtung des Führungsprofils beabstandeten Sensoren (eines Überfüllsensors; und
- Rückschließen auf eine Überfüllung der Förderstrecke, wenn nach dem Erfassen der Kennung durch einen ersten Sensor der mindestens zwei Sensoren innerhalb eines vorgegebenen Zeitintervalls eine Erfassung der Kennung durch einen zweiten Sensor der mindestens zwei Sensoren ausbleibt.

Das Befördern der Carrier kann das berührungslose Vorbeiführen der Carrier entlang einer Längsseite eines Gehäuses des Überfüllsensors aufweisen.

Die Carrier können über einen ersten Weichenausgang einer Weiche der Förderstrecke zugeführt werden, wenn innerhalb eines vorgegebenen Zeitintervalls eine Erfassung der Kennung durch einen zweiten Sensor der mindestens zwei Sensoren erfolgt. Das Verfahren kann weiterhin das Verstellen der Weiche aufweisen, wenn auf eine Überfüllung der Förderstrecke rückgeschlossen worden ist, woraufhin mindestens einer der Carrier einem zweiten Weichenausgang der Weiche zugeführt wird.

Weitere Einzelheiten der Erfindung werden anhand der nachstehenden Figuren erläutert. Dabei zeigt:
- Figur 1: eine Förderstrecke eines Hängeförderers gemäß dem Stand der Technik;
- Figur 2: eine beispielhafte Ausführungsform einer erfindungsgemäßen Förderstrecke im Querschnitt senkrecht zur Längsrichtung des Führungsprofils;
- Figur 3: eine Seitenansicht einer beispielhaften Ausführungsform einer erfindungsgemäßen Förderstrecke;
- Figur 4: eine beispielhafte Ausführungsform eines Überfüllsensors mit einem Carrier;
- Figur 5: eine Draufsicht auf die Ausführungsform gemäß Figur 4; und
- Figur 6: einen Ausschnitt einer beispielhaften Ausführungsform eines Hängeförderers.

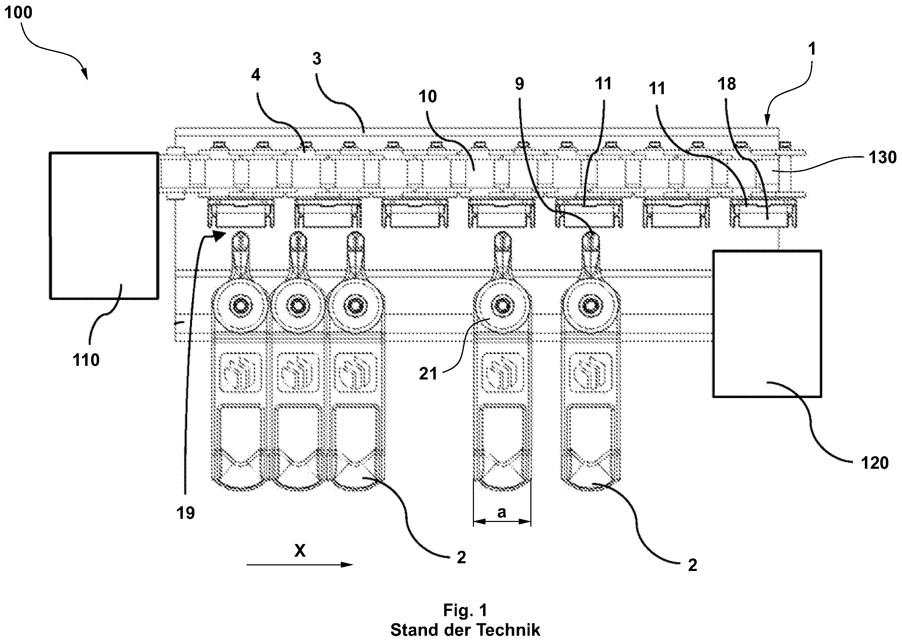

Die Fig. 1 zeigt einen Hängeförderer 100 mit einer Förderstrecke 1 gemäß dem Stand der Technik. Der Hängeförderer 100 ist in allen Einzelheiten in der EP 3 670 393 A1 beschrieben. Der Hängeförderer 100 zum Befördern von hängenden Gegenständen umfasst ein Zugmittel 120, welches als Förderkette 130 ausgebildet sein kann und mit einem Förderantrieb antreibbar ist. Der Hängeförderer 100 weist eine Förderstrecke 1 mit einer ersten Förderschiene und einer zweiten Förderschiene auf. Die erste Förderschiene nimmt die Förderkette 130 auf. An der Förderkette 130 sind die Mitnehmerelemente 11 mit dem Magnet 18 angeordnet, welche mithilfe der Bolzen an der Förderkette 130 gehalten werden. Der Carrier 2 ist mithilfe der Rollen 21 in der Förderschiene gelagert, erstreckt sich durch eine Förderschienenöffnung und kann sich darin entlang der Förderstrecke 1 bewegen.

Die Förderkette 130 wird samt dem Mitnehmerelement 11 entlang der Förderstrecke 1 bewegt, wobei der Magnet 18 mit dem ferromagnetischen Gegenstück 9 am Transportelement 43 magnetisch gekoppelt ist und dieses entlang der Förderstrecke bewegt. Die Förderkette 130 weist an jedem Förderkettenglied ein Mitnehmerelement 11 auf. Dabei ist es möglich, dass ein Mitnehmerelement 11 einen Carrier 2 fördert oder ein Mitnehmerelement 11 mehrere Carrier 2 antreibt. Die für jedes Mitnehmerelement 11 separat einstellbare Magnetkraft wird beim Magnetisieren mittels einer Magnetisierungsvorrichtung 120 eingestellt, welche temporär oder permanent an der Hängeförderer 100 angeordnet werden kann.

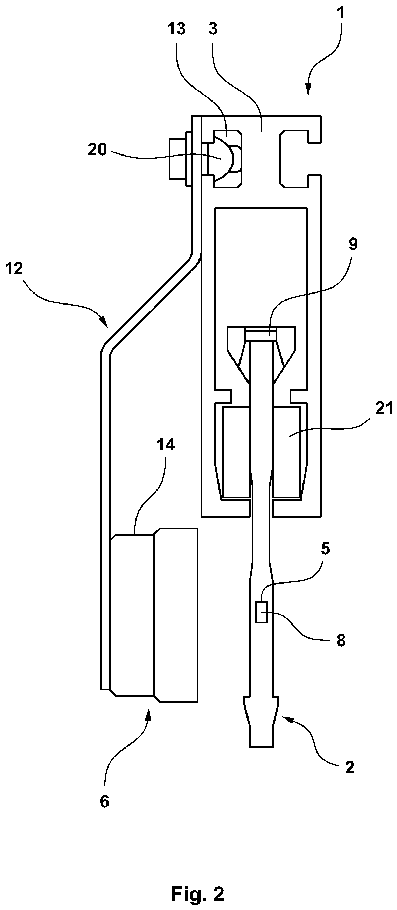

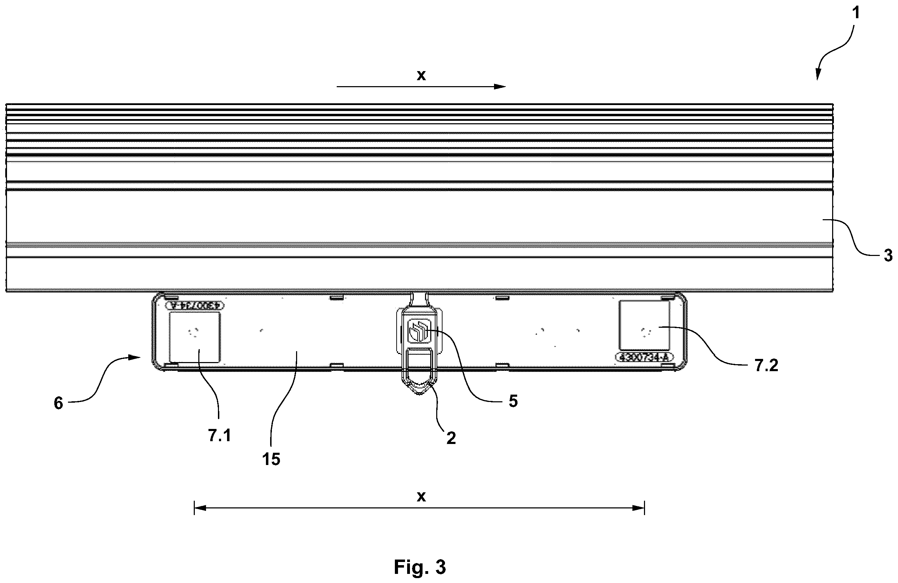

Die Figur 2 zeigt eine beispielhafte Ausführungsform einer erfindungsgemäßen Förderstrecke 1, die sich insbesondere durch den Überfüllsensor 6 von der Ausführungsform gemäß dem Stand der Technik, die in Figur 1 gezeigt ist, unterscheidet. Demgemäß weist der Carrier 2 abweichend von dem Carrier 2 aus dem Stand der Technik eine Kennung 5, die beispielsweise einen drahtlos auslesbaren Speicher 8 aufweisen kann, beispielsweise einen RFID-Transponder. Die Förderstrecke 1 weist weiterhin den erfindungsgemäßen Überfüllsensor 6 auf, der mit mindestens zwei in Längsrichtung des Führungsprofils 3 voneinander beabstandeten Sensoren 7.1, 7.2 (s. Figur 3) zur Auslesung der Kennung 5 ausgestattet ist.

Der Überfüllsensor 6 ist mit einem Halteblech parallel zu und seitlich von dem Führungsprofil 3 angeordnet, wobei der Überfüllsensor 6 das Profil 3 an einer Unterseite des Profils 3 überragt. Der Carrier 2 ragt an der genannten Unterseite des Profils 3 aus dem Profil heraus. Die Kennung 5 ist demgemäß in einem Bereich zwischen den Rollen 21, mit denen der Carrier 2 in dem Profil 3 verfahrbar gelagert ist und einem unteren Ende des Carriers 2, über das eine Tasche des Hängeförderers in den Carrier 2 eingehängt werden kann, angeordnet.

Die Haltevorrichtung 12 ist als ein Metallblech ausgebildet, welches eine Z-Kantung aufweist, wobei das Halteblech an den beiden äußeren Kantungen der Z-Kantung einerseits den Überfüllsensor 6 und gegenüberliegend ein Befestigungsmittel in Form eines Nutensteins 20 aufweist, der in eine Nut 13 des Profils 3 eingreift und somit das Halteblech 12 an dem Profil 3 festlegt.

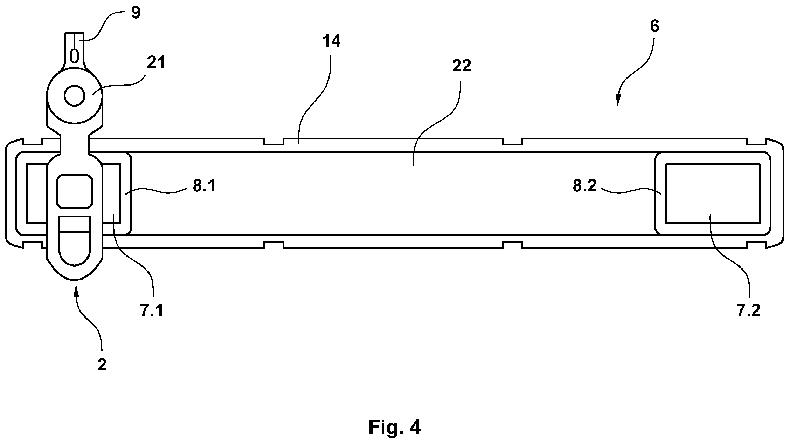

Den Figuren 3 und 4 ist zu entnehmen, dass die beiden Sensoren 7.1 und 7.2 entlang der Förderrichtung x bzw. Förderrichtung der Carrier 2 entlang des Profils 3 beabstandet angeordnet sind, sodass nacheinander ein passierender Carrier 2 bzw. dessen Kennung 5 von dem in Förderrichtung ersten Sensor 7.1 und anschließend von dem Sensor 7.2 erfasst wird, wenn aufgrund einer Überfüllung der Förderstrecke 1 der Carrier 2 nicht in einem Zwischenbereich zwischen dem ersten Sensor 7.1 und dem zweiten Sensor 7.2 steckenbleibt. So ist vorgesehen, dass nach dem Erkennen einer eindeutigen Kennung 5 eines Carriers 2 eine Karenzzeit abgewartet wird, innerhalb welcher die Erkennung des Carriers durch den zweiten Sensor 7.2 erwartet wird, wobei nach einem Überschreiten der Karenzzeit auf eine Überfüllung der Förderstrecke 1 geschlossen wird.

Die beiden Sensoren 7.1 können einen Abstand zueinander aufweisen, der mindestens dem Fünffachen einer Abmessung des Carriers 2 in der Förderrichtung x entspricht. Auf diese Weise kann auch bei Einhaltung der Karenzzeit anhand der Anzahl der von dem ersten Sensor 7.1 nach dem Erkennen des ersten Carriers 2 erkannter weiterer Carrier 2 vor dem Erkennen des ersten Carriers durch den zweiten Sensor 7.2 auf eine Fülldichte der Förderstrecke 1 geschlossen werden, insbesondere ob die Carrier 2 bereits Stoß an Stoß entlang der Förderstrecke transportiert sind oder noch einen Abstand zueinander aufweisen.

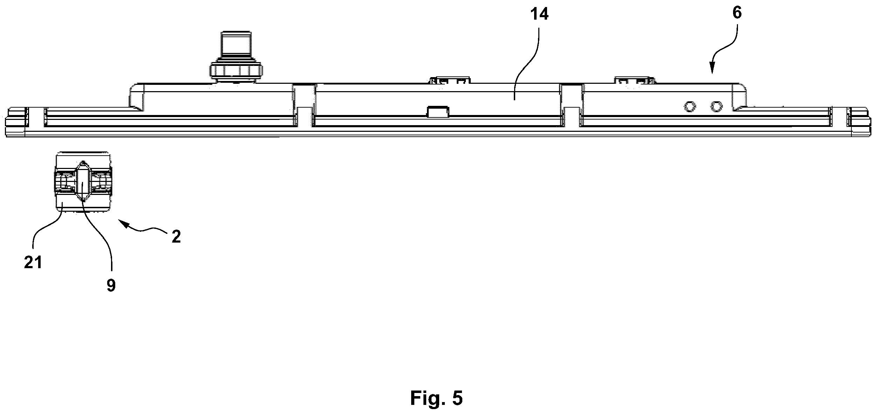

Den Figuren 4 und 5 ist weiterhin zu entnehmen, dass der Überfüllsensor 6 im Wesentlichen aus einem Gehäuse 14 bestehen kann, in welchem eine Platine 22 aufgenommen ist, an deren gegenüberliegenden Längsenden die beiden Sensoren 7.1, 7.2 angeordnet sind. Die Sensoren 7.1, 7.2 können jeweils einen RFID-Transponder 8.1, 8.2 aufweisen. Der Carrier 2 ist berührungslos an dem Überfüllsensor 6, insbesondere unter einem Abstand zu dem Gehäuse 14, vorbeigeführt.

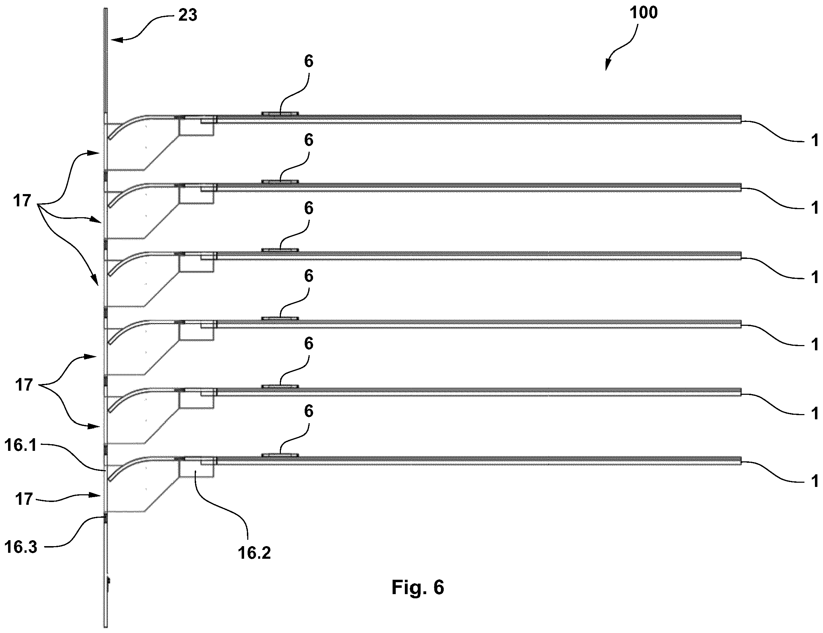

Die Figur 6 zeigt eine beispielhafte Anwendung einer erfindungsgemäßen Förderstrecke 1 als Bestandteil eines Hängeförderers 100, insbesondere zur Ausbildung einer Sortierschleife für die Sequenzierung der Carrier, beispielsweise um die Carrier mit daran hängenden Taschen in einer bevorzugteren Reihenfolge einer Entladestation oder einer Beladestation zuzuführen.

Über einen Transferförderer 23 können der Sortierschleife eine Vielzahl Carrier 2 zugeführt sein. Über eine Mehrzahl Weichen 17 können die Carrier 2 einer bestimmten Förderstrecke 1 einer Mehrzahl parallel zueinander verlaufender Förderstrecken 1 zugeführt werden. Dazu werden die Carrier 2 über einen Weicheneingang 16.3 und einen Weichenausgang 16.2 derselben Weiche 17 einer an den Weichenausgang 16.2 angeschlossenen Förderstrecke 1 zugeführt, oder über einen weiteren Weichenausgang 16.2 einer nachfolgenden Weiche 17 zugeführt. Die Entscheidung, ob ein Carrier einer bestimmten der Förderstrecke 1 zugeführt wird, kann davon abhängig gemacht werden, dass mit Hilfe eines Überfüllsensors 6 ein Füllstand der betreffenden Förderstrecke 1 erfasst wird. Beispielsweise kann eine Regelung darauf abzielen, eine gleichmäßige Befüllung der Förderstrecken 1 zu erreichen, um flexibel auf die Anforderung einer bestimmten Tasche reagieren zu können.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

### Bezugszeichenliste.

- 1: Förderstrecke
- 2: Carrier
- 3: Führungsprofil
- 4: Mitnehmer
- 5: Kennung
- 6: Überfüllsensor
- 7.1: erster Sensor
- 7.2: zweiter Sensor
- 8: Speicher
- 8.1: erster RFID-Transponder
- 8.2: zweiter RFID-Transponder
- 9: Kupplungselement
- 10: Förderkette
- 11: Mitnehmerelement
- 12: Halteelement
- 13: Nut
- 14: Gehäuse
- 15: Längsseite
- 16.1: erster Weichenausgang
- 16.2: zweiter Weichenausgang
- 16.3: Weicheneingang
- 17: Weiche
- 18: Magnet
- 19: Luftspalt
- 20: Nutenstein
- 21: Rolle
- 22: Platine
- 23: Transferförderer
- 110: Förderantrieb
- 120: Magnetisierungsvorrichtung
- 130: Förderkette
- x: Förderrichtung

## Patentansprüche

1. Förderstrecke (1) für einen Hängeförderer (100), wobei die Förderstrecke (1) eine Mehrzahl Carrier (2) aufweist, die in ein Führungsprofil (3) der Förderstrecke (1) eingehängt und, vorzugsweise von einem Mitnehmer (4), entlang des Führungsprofils (3) bewegt sind, wobei der Carrier (2) eine Kennung (5) und die Förderstrecke (1) mindestens zwei in Längsrichtung des Führungsprofils (3) beabstandete Sensoren (7.1, 7.2) zur Auslesung der Kennung (5) aufweist, **dadurch gekennzeichnet, dass** die zwei Sensoren (7.1, 7.2) Teil eines Überfüllsensors (6) sind und dieser oder eine mit dem Überfüllsensor (6) kommunikativ in Verbindung stehende Steuerung dazu eingerichtet ist, auf eine Überfüllung der Förderstrecke (1) zu schließen, wenn nach einem Erfassen der Kennung (5) durch den ersten Sensor (7.1) innerhalb eines vorgegebenen Zeitintervalls eine Erfassung der Kennung (5) durch den zweiten Sensor (7.2) ausbleibt.

2. Förderstrecke (1) nach Anspruch 1, bei der der Abstand (d) zwischen zweien der mindestens zwei Sensoren (7.1, 7.2) einem Mehrfachen, vorzugsweise mindestens dem Dreifachen und besonders bevorzugt mindestens dem Fünffachen einer jeweiligen Abmessung (a) der Carrier (2) in seiner Förderrichtung (x) entlang des Führungsprofils (3) beträgt.

3. Förderstrecke (1) nach Anspruch 1 oder 2, bei der der Abstand (d) zwischen zweien der mindestens zwei Sensoren (7.1, 7.2) maximal dem Fünfzigfachen, vorzugsweise maximal dem Zwanzigfachen und besonders bevorzugt maximal dem Zehnfachen der jeweiligen Abmessung (a) des Carriers (2) in seiner Förderrichtung (x) entlang des Führungsprofils (3) beträgt.

4. Förderstrecke (1) nach einem der vorangegangenen Ansprüche, bei der die Kennung (5) eine den betreffenden Carrier (2) eindeutig identifizierende Kennung (5) ist, die in einem berührungslos auslesbaren Speicher (8), beispielsweise in einem RFID-Transponder, hinterlegt oder von den beabstandeten Sensoren (7.1, 7.2) optisch auslesbar ist.

5. Förderstrecke (1) nach einem der vorangegangenen Ansprüche, bei der die Carrier (2) jeweils ein magnetisches Kupplungselement (9) aufweisen und der Mitnehmer (4) eine entlang des Führungsprofils (3) geführte Förderkette (10) mit einer Vielzahl entlang der Förderkette (10) angeordneter Mitnehmerelemente (11) ist, wobei die Kupplungselemente (9) der Carrier (2) über Magnetkraft berührungslos und lösbar an die Mitnehmerelemente (11) der Förderkette (10) gekoppelt sind.

6. Förderstrecke (1) nach einem der vorangegangenen Ansprüche, bei der der Überfüllsensor (6) dazu eingerichtet ist, einen zeitlichen Abstand zwischen dem Erfassen der Kennung (5) durch einen ersten Sensor (7.1) der entlang der Förderstrecke (1) angeordneten Sensoren (7.1, 7.2) und dem Erfassen derselben Kennung (5) durch einen in Längsrichtung des Führungsprofils (3) dem ersten Sensor (7.1) nachfolgenden zweiten Sensor (7.2) der entlang der Förderstrecke (1) angeordneten Sensoren (7.1, 7.2) zu bestimmen.

7. Förderstrecke (1) nach Anspruch 1, bei der das Zeitintervall gemäß t = d/v + tₒ bestimmt ist, wobei d der Abstand der beiden Sensoren (7.1, 7.2) zueinander, v die Vorschubgeschwindigkeit des Mitnehmers (4) entlang des Führungsprofils (3) und tₒ eine Karenzzeit ist.

8. Förderstrecke (1) nach einem der vorangegangen Ansprüche, bei der der Überfüllsensor (6) dazu eingerichtet ist, auf eine Überfüllung der Förderstrecke (1) zu schließen, wenn die Kennung (5) länger als eine Karenzzeit in einem Erfassungsbereich eines der beiden Sensoren (7.1,7.2) angeordnet ist.

9. Förderstrecke (1) nach einem der vorangegangen Ansprüche, bei der der Überfüllsensor (6) dazu eingerichtet ist, auf eine Überfüllung der Förderstrecke (1) zu schließen, wenn die Kennung (5) innerhalb einer Karenzzeit mehrfach in einem Erfassungsbereich mindestens eines der beiden Sensoren (7.1,7.2) angeordnet ist.

10. Förderstrecke (1) nach einem der vorangegangen Ansprüche, bei der der Überfüllsensor (6) dazu eingerichtet ist, eine Anzahl der Carrier auf der Förderstrecke (1) zu zählen.

11. Förderstrecke (1) nach einem der vorangegangenen Ansprüche, bei der der Überfüllsensor (6) seitlich von dem Führungsprofil (3) und die Sensoren (7.1, 7.2) mit ihrem Messfeld dem Carrier (2) zugewandt angeordnet sind.

12. Förderstrecke (1) nach einem der vorangegangenen Ansprüche, bei der der Überfüllsensor (6) ein Gehäuse (14) aufweist, welches sich mit einer Längsseite (15) parallel zu der Längsrichtung des Führungsprofils (3) erstreckt, und wobei die mindestens zwei Sensoren (7.1, 7.2) in der Längsrichtung zueinander beabstandet in dem Gehäuse (14) angeordnet sind.

13. Verfahren für die Erkennung einer Überfüllung einer Förderstrecke (1) eines Hängeförderers (100), wobei das Verfahren die Schritte aufweist:
- Befördern einer Vielzahl Carrier (2) entlang einer Förderstrecke (1) eines Hängeförderers (100), wozu die Carrier (2) in ein Führungsprofil (3) des Hängeförderers (100) eingehängt von einem Mitnehmer (4) entlang des Führungsprofils (3) angetriebenen werden;
- Erfassen einer Kennung (5) eines der Carrier (2) durch einen ersten von mindestens zweien in Längsrichtung des Führungsprofils (3) beabstandeten Sensoren (7.1, 7.2) eines Überfüllsensors (6); und
- Rückschließen auf eine Überfüllung der Förderstrecke (1), wenn nach dem Erfassen der Kennung (5) durch einen ersten Sensor (7.1) der mindestens zwei Sensoren (7.1, 7.2) innerhalb eines vorgegebenen Zeitintervalls eine Erfassung der Kennung (5) durch einen zweiten Sensor (7.2) der mindestens zwei Sensoren (7.1, 7.2) ausbleibt.

14. Verfahren nach Anspruch 13, bei dem das Befördern der Carrier (2) das berührungslose Vorbeiführen der Carrier (2) entlang einer Längsseite (15) eines Gehäuses des Überfüllsensors (6) aufweist.

15. Verfahren nach Anspruch 13 oder 14, bei dem die Carrier (2) über einen ersten Weichenausgang (16.1) einer Weiche (17) der Förderstrecke (1) zugeführt werden, wenn innerhalb eines vorgegebenen Zeitintervalls eine Erfassung der Kennung (5) durch einen zweiten Sensor (7.2) der mindestens zwei Sensoren (7.1, 7.2) erfolgt, und wobei das Verfahren das Verstellen der Weiche (17) aufweist, wenn auf eine Überfüllung der Förderstrecke (1) rückgeschlossen worden ist, woraufhin die Carrier (2) einem zweiten Weichenausgang (16.2) der Weiche (17) zugeführt werden.

## Claims

1. A conveying section (1) for a suspended conveyer (100), wherein the conveying section (1) has a plurality of carriers (2) which are suspended in a guide profile (3) of the conveying section (1) and are moved, preferably by a driver (4), along the guide profile (3), wherein the carrier (2) has an identifier (5) and the conveying section (1) has at least two sensors (7.1, 7.2) which are spaced apart in the longitudinal direction of the guide profile (3) and are intended for reading the identifier (5), **characterized in that** the two sensors (7.1, 7.2) are part of an overfilling sensor (6) and the latter or a controller which is communicatively connected to the overfilling sensor (6) is configured to infer an overfilling of the conveying section (1) if, after detection of the identifier (5) by the first sensor (7.1) within a predefined time interval, detection of the identifier (5) by the second sensor (7.2) is absent.

2. The conveying section (1) according to claim 1, in which the distance (d) between two of the at least two sensors (7.1, 7.2) is a multiple, preferably at least three times and particularly preferably at least five times a respective dimension (a) of the carriers (2) in their conveying direction (x) along the guide profile (3).

3. The conveying section (1) according to claim 1 or 2, in which the distance (d) between two of the at least two sensors (7.1, 7.2) is at most fifty times, preferably at most twenty times and particularly preferably at most ten times the respective dimension (a) of the carrier (2) in its conveying direction (x) along the guide profile (3).

4. The conveying section (1) according to one of the preceding claims, in which the identifier (5) is an identifier (5) uniquely identifying the relevant carrier (2), which is stored in a contactlessly readable memory (8), for example in an RFID transponder, or is optically readable by the spaced sensors (7.1, 7.2).

5. The conveying section (1) according to one of the preceding claims, in which the carriers (2) each have a magnetic coupling element (9) and the driver (4) is a conveying chain (10) guided along the guide profile (3) with a plurality of driver elements (11) arranged along the conveying chain (10), wherein the coupling elements (9) of the carriers (2) are contactlessly and releasably coupled to the driver elements (11) of the conveying chain (10) via magnetic force.

6. The conveying section (1) according to one of the preceding claims, in which the overfill sensor (6) is configured to determine a time interval between the detection of the identifier (5) by a first sensor (7.1) of the sensors (7.1, 7.2) arranged along the conveying section (1) and the detection of the same identifier (5) by a second sensor (7.2) of the sensors (7.1, 7.2) arranged along the conveying section (1) following the first sensor (7.1) in the longitudinal direction of the guide profile (3).

7. The conveying section (1) according to claim 1, in which the time interval is determined according to t = d/v + t₀, wherein d is the distance between the two sensors (7.1, 7.2), v is the feed speed of the driver (4) along the guide profile (3) and t₀ is a waiting time.

8. The conveying section (1) according to one of the preceding claims, in which the overfill sensor (6) is configured to infer an overfill of the conveying section (1) if the identifier (5) is arranged longer than a waiting time in a detection range of one of the two sensors (7.1, 7.2).

9. The conveying section (1) according to one of the preceding claims, in which the overfill sensor (6) is configured to infer an overfill of the conveying section (1) if the identifier (5) is arranged multiple times within a waiting time in a detection range of at least one of the two sensors (7.1, 7.2).

10. The conveying section (1) according to one of the preceding claims, in which the overfill sensor (6) is configured to count a number of carriers on the conveying section (1).

11. The conveying section (1) according to one of the preceding claims, in which the overfill sensor (6) is arranged laterally of the guide profile (3) and the sensors (7.1, 7.2) are arranged with their measurement field facing the carrier (2).

12. The conveying section (1) according to one of the preceding claims, in which the overfill sensor (6) comprises a housing (14) which extends with a longitudinal side (15) parallel to the longitudinal direction of the guide profile (3), and wherein the at least two sensors (7.1, 7.2) are arranged spaced apart from one another in the longitudinal direction in the housing (14).

13. A method for detecting an overfill of a conveying section (1) of a suspended conveyer (100), wherein the method comprises the steps:
- conveying a plurality of carriers (2) along a conveying section (1) of a suspended conveyer (100), for which purpose the carriers (2) are driven suspended in a guide profile (3) of the suspended conveyer (100) by a driver (4) along the guide profile (3);
- detecting an identifier (5) of one of the carriers (2) by a first of at least two sensors (7.1, 7.2) of an overfill sensor (6) spaced apart in the longitudinal direction of the guide profile (3); and
- inferring an overfill of the conveying section (1) if, after the detection of the identifier (5) by a first sensor (7.1) of the at least two sensors (7.1, 7.2) within a predetermined time interval, a detection of the identifier (5) by a second sensor (7.2) of the at least two sensors (7.1, 7.2) fails.

14. The method according to claim 13, in which the conveying of the carriers (2) comprises the contactless passing of the carriers (2) along a longitudinal side (15) of a housing of the overfill sensor (6).

15. The method according to claim 13 or 14, in which the carriers (2) are supplied via a first switch output (16.1) of a switch (17) of the conveying section (1) if, within a predetermined time interval, a detection of the identifier (5) by a second sensor (7.2) of the at least two sensors (7.1, 7.2) takes place, and wherein the method comprises the adjustment of the switch (17) if an overfill of the conveying section (1) has been inferred, whereupon the carriers (2) are supplied to a second switch output (16.2) of the switch (17).

## Revendications

1. Ligne de convoyage (1) pour un convoyeur suspendu (100), dans laquelle la ligne de convoyage (1) comprend une pluralité de transporteurs (2), qui sont suspendus dans un profilé de guidage (3) de la ligne de convoyage (1), et qui sont déplacés par un entraîneur (4), le long du profilé de guidage (3), dans laquelle le transporteur (2) comprend une identification (5) et la ligne de convoyage (1) comprend au moins deux capteurs (7.1, 7.2), distants dans la direction longitudinale du profilé de guidage (3), pour la lecture de l'identification (5), **caractérisée en ce que** les deux capteurs (7.1, 7.2) font partie d'un capteur de trop-plein (6) et celui-ci ou une commande en liaison de communication avec le capteur de trop-plein (6) est conçue pour détecter un trop-plein de la ligne de convoyage (1) lorsque, après une détection de l'identification (5) par le premier capteur (7.1) dans un intervalle de temps prédéterminé, une détection de l'identification (5) n'est pas effectuée par le deuxième capteur (7.2).

2. Ligne de convoyage (1) selon la revendication 1, dans laquelle la distance (d) entre deux des au moins deux capteurs (7.1, 7.2) représente un multiple, de préférence au moins le triple et plus particulièrement de préférence au moins le quintuple d'une dimension (a) correspondante des transporteurs (2) dans sa direction de convoyage (x) le long du profilé de guidage (3).

3. Ligne de convoyage (1) selon la revendication 1 ou 2, dans laquelle la distance (d) entre deux des au moins deux capteurs (7.1, 7.2) représente au maximum quinze fois, de préférence au maximum vingt fois et plus particulièrement de préférence au maximum dix fois la dimension (a) correspondante du transporteur (2) dans sa direction de convoyage (x) le long du profilé de guidage (3).

4. Ligne de convoyage (1) selon l'une des revendications précédentes, dans laquelle l'identification (5) est une identification (5) identifiant de manière unique le transporteur (2) correspondant, qui est enregistrée dans une mémoire lisible sans contact (8), par exemple un transpondeur RFID ou qui peut être lue optiquement par les capteurs distants (7.1, 7.2).

5. Ligne de convoyage (1) selon l'une des revendications précédentes, dans laquelle les transporteurs (2) comprennent chacun un élément de couplage magnétique (9) et l'entraîneur (4) est une chaîne de convoyage (10) guidée le long du profilé de guidage (3), avec une pluralité d'éléments d'entraînement (11) disposés le long de la chaîne de convoyage (10), dans laquelle les éléments de couplage (9) des transporteurs (2) sont couplés par une force magnétique sans contact et de manière amovible aux éléments d'entraînement (11) de la chaîne de convoyage (10).

6. Ligne de convoyage (1) selon l'une des revendications précédentes, dans laquelle le capteur de trop-plein (6) est conçu pour déterminer un intervalle de temps entre la détection de l'identification (5) par le premier capteur (7.1) des capteurs (7.1, 7.2) disposés le long de la ligne de convoyage (1) et la détection de cette même identification (5) par un deuxième capteur (7.2) suivant le premier capteur (7.1) dans la direction longitudinale du profilé de guidage (3), des capteurs (7.1, 7.2) disposés le long de la ligne de convoyage (1).

7. Ligne de convoyage (1) selon la revendication 1, dans laquelle l'intervalle de temps est déterminé selon la formule t = d/v + tₒ, dans laquelle d est la distance entre les deux capteurs (7.1, 7.2), v est la vitesse d'avance de l'entraîneur (4) le long du profilé de guidage (3) et tₒ est un temps de carence.

8. Ligne de convoyage (1) selon l'une des revendications précédentes, dans laquelle le capteur de trop-plein (6) est conçu pour détecter un trop-plein de la ligne de convoyage (1) lorsque l'identification (5) est disposée plus longtemps qu'un temps de carence dans une zone de détection d'un des deux capteurs (7.1, 7.2).

9. Ligne de convoyage (1) selon l'une des revendications précédentes, dans laquelle le capteur de trop-plein (6) est conçu pour détecter un trop-plein de la ligne de convoyage (1) lorsque l'identification (5) est disposée, dans un temps de carence, plusieurs fois dans une zone de détection d'au moins un des deux capteurs (7.1, 7.2).

10. Ligne de convoyage (1) selon l'une des revendications précédentes, dans laquelle le capteur de trop-plein (6) est conçu pour compter un nombre de transporteurs sur la ligne de convoyage (1).

11. Ligne de convoyage (1) selon l'une des revendications précédentes, dans laquelle le capteur de trop-plein (6) est disposée sur le côté du profilé de guidage (3) et les capteurs (7.1, 7.2) sont disposés avec leur champ de mesure orienté vers le transporteur (2).

12. Ligne de convoyage (1) selon l'une des revendications précédentes, dans laquelle le capteur de trop-plein (6) comprend un boîtier (14) qui s'étend avec un côté longitudinal (15) parallèle à la direction longitudinale du profilé de guidage (3) et dans laquelle les au moins deux capteurs (7.1, 7.2) sont disposés dans le boîtier (14), de manière distante entre eux dans la direction longitudinale.

13. Procédé de détection d'un trop-plein d'une ligne de convoyage (1) d'un convoyeur suspendu (100), dans lequel le procédé comprend les étapes suivantes :
- convoyage d'une pluralité de transporteurs (2) le long d'une ligne de convoyage (1) d'un convoyeur suspendu (100), les transporteurs (2) étant pour cela entraînés, de manière suspendue dans un profilé de guidage (3) du convoyeur suspendu (100), par un entraîneur (4) le long du profilé de guidage (3) ;
- détection d'une identification (5) d'un des transporteurs (2) par un premier des au moins deux capteurs (7.1, 7.2), distants dans la direction longitudinale du profilé de guidage (3), d'un capteur de trop-plein (6) ; et
- détermination d'un trop-plein de la ligne de convoyage (1) lorsque, après la détection de l'identification (5) par le premier capteur (7.1) des au moins deux capteurs (7.1, 7.2), dans un intervalle de temps prédéterminé, une détection de l'identification (5) n'est pas effectuée par un deuxième capteur (7.2) des au moins deux capteurs (7.1, 7.2).

14. Procédé selon la revendication 13, dans lequel le convoyage des transporteurs (2) comprend le passage sans contact des transporteurs (2) le long d'un côté longitudinal (15) d'un boîtier du capteur de trop-plein (6).

15. Procédé selon la revendication 13 ou 14, dans lequel les transporteurs (2) sont introduits, par l'intermédiaire d'une première sortie d'aiguillage (16.1), dans un aiguillage (17) de la ligne de convoyage (1) lorsque, dans un intervalle de temps prédéterminé, une détection de l'identification (5) est effectuée par un deuxième capteur (7.2) des au moins deux capteurs (7.1, 7.2) et dans lequel le procédé comprend le réglage de l'aiguillage (17) lorsqu'un trop-plein de la ligne de convoyage (1) a été détecté, les transporteurs (2) étant ensuite introduits dans une deuxième sortie d'aiguillage (16.2) de l'aiguillage (17).
